Europäisches Patentamt

European Patent Office

Office européen des brevets

(19)

(11) **EP 1 074 609 A1**

(12) **EUROPEAN PATENT APPLICATION**

(43) Date of publication:
07.02.2001 Bulletin 2001/06

(51) Int Cl.⁷: **C12J 1/00**

(21) Application number: **99115018.6**

(22) Date of filing: **02.08.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Jeong, Yong Jin**<br>  **Taegu-city (KR)**<br>• **Kim, Kwang Soo**<br>  **Taegu-city (KR)** |
| (71) Applicant: **Kyongbuk College of Science**<br>**Chilgok-gun, Kyungsanbuk-do (KR)** | (74) Representative: **Müller, Hans-Jürgen, Dipl.-Ing.**<br>**Müller, Schupfner & Gauger**<br>**Postfach 10 11 61**<br>**80085 München (DE)** |

(54) **Persimmon vinegar and preparation thereof**

(57)  Disclosed are persimmon vinegar and a preparation method therefor. The persimmon vinegar, which is good for health, is prepared from astringent persimmon fruits, which are disadvantageous in taste, by alcohol fermentation and acetic acid fermentation, in sequence. For the alcohol fermentation, the novel strain, *Saccharomyces kluyveri* DJ97 (KCTC 0591BP) is used. In combination with various additives, such as polydextrose, liquid fructose, concentrated pear extract, honey, citric acid, sodium citrate, etc., the persimmon vinegar can provide a beverage.

EP 1 074 609 A1

**Description**

BACKGROUND OF THE INVENTION

1. Field of the invention

The present invention relates to persimmon vinegar and a preparation method therefor. More particularly, the present invention relates to the use of a novel alcohol fermentation bacterial strain in the alcohol fermentation of astringent persimmon fruits, in advance of acetic acid fermentation, under a controlled condition.

2. Description of the Prior Art

On the whole, there are two types of edible vinegar: fermented vinegar, which is prepared from starch or alcohol by fermentation; and synthetic vinegar, which is prepared from diluted glacial acetic acid in combination with food additives, such as flavorings and colorants. As materials for fermented vinegar, various foods and fruits are utilized, including rice, lees, lemon, persimmon, apple, grape and the like. Fermented vinegar is based on the acetic acid which is produced by the acetic acid fermentation of such materials. In addition, the fermented vinegar comprises volatile or non-volatile organic acids, saccharides, amino acids and esters at minor amounts and the characteristic sour tastes are determined by combinations of these minor compounds.

Persimmon fruits are largely divided into two species: sweet persimmon (*Diospyros khaki, L.*) and astringent persimmon (*Diospyros khaki, T.*). Persimmon fruits are favored by people and have an advantage of being able to be harvested by using less amounts of manure fertilizer and agricultural chemicals, relative to other fruits. For these reasons, the production amount of persimmon fruits increases each year in Korea, amounting to, for example, 96,000 M/T in 1990, 110,000 M/T in 1991 and 155,000 M/T in 1992.

Sitologically, persimmon fruits are rich in saccharides and vitamins A and C. Medicinally, they are also known to be effective for contracting the large intestine, promoting the secretion of intestinal juices and stopping coughing. Despite these virtues, persimmon fruits are restrictedly utilized by many factors.

Like most fruits, sweet persimmon fruits are sold green. During transportation and storage, however, tenderization and the physiological troubles attributable to changed environments, take place in sweet persimmon fruits, as in other fruits, deteriorating their quality finally to the extent that they cannot be placed on the market. To be favorable in taste, astringent persimmon fruits usually undergo astringency removal or tenderization. In spite of the processing, the astringency-removed persimmon fruits are in poor demand because their taste is not much improved.

In order to overcome the above disadvantages, there have been traditionally developed various processed persimmon fruits in Korea, including dried persimmon fruits, mellowed persimmon fruits, persimmon punches, powdered persimmon fruits, and persimmon vinegar. Persimmon vinegar, a traditional fermented food in Korea, has been favorably used as a home remedy for curing hangovers, refreshing the body, and cleaning the intestine.

Generally, persimmon vinegar is prepared by allowing persimmon fruits to undergo fermentation naturally for 5 to 6 months. In this course, however, tannin, which is in abundance in persimmon fruits being main responsibility for their astringent taste, is metabolized is metabolized by polyphenol oxidase to cause a browning phenomenon and inhibit the alcohol fermentation of the persimmon fruits, and associated with the enzyme protein, resulting in colored precipitates in persimmon vinegar. In addition, such natural fermentation suffers serious problems as follows: first, during the long-term natural fermentation, the persimmon vinegar is frequently contaminated by other bacteria, so it is liable to poor sanitation. Next, persimmon vinegar is of low product value because its color is different from one product to another product. Another problem is that the long-term natural fermentation makes large-scale production and storage difficult, resulting in economical unfavor.

SUMMARY OF THE INVENTION

It is, therefore, an object of the present invention to overcome the problems encountered in prior arts and to provide persimmon vinegar which is rich in nutrients and superior in acidity.

It is another object of the present invention to provide a method for preparing such persimmon vinegar, which is economically favorable and allows high quality products.

In accordance with an aspect of the present invention, there is provided persimmon vinegar, which has a total acidity content of 4% or higher and is prepared by fermenting astringent persimmon fruits.

In accordance with another aspect of the present invention, there is provided a method for preparing the persimmon vinegar, in which crushed persimmon fruits are subjected to alcohol fermentation at a temperature of 20 to 30 °C after inoculation with an alcohol fermentation seed strain and with *Saccharomyces kluveri* DJ97 (KCTC 0591BP) and then, to acetic acid fermentation at the same temperature at an aeration rate of 220 to 250 rpm for 150 to 170 hours with the aid of acetic acid fermentation seed vinegar bacteria.

In the present invention, first, optimal conditions for the alcohol fermentation and acetic acid fermentation of persimmon fruits are established by response surface analysis. Then, under the optimal conditions, crushed astringent persimmon fruits undergo alcohol fermentation and acetic acid fermentation with the aid of corresponding fermentation bacteria. The persimmon vinegar thus prepared is measured for pH and total acidity, color and brown chromaticity, turbidity, reducing sugar content, free sugar and organic component content, amino acid content, total tannin content, mineral content, alcohol content, and volatile component content. With the persimmon vinegar, food additives, such as polydextrose, liquid fructose, concentrated pear extract, honey, citric acid, sodium citrate, etc, are combined to provide a persimmon vinegar beverage.

BRIEF DESCRIPTION OF THE DRAWINGS

The above and other objects, features and other advantages of the present invention will be more clearly understood from the following detailed description taken in conjunction with the accompanying drawings, in which:

Fig. 1 shows alcohol contents which are plotted against aeration rates and Brix degrees;
Fig. 2 shows alcohol contents which are plotted against Brix degrees and fermentation times;
Fig. 3 shows alcohol contents which are plotted against fermentation times and aeration rates;
Fig. 4 is a result of the response surface analysis which is conducted at a fixed aeration rate with fermentation time and Brix degree being as variables;
Fig. 5 shows alcohol contents which are plotted against Brix degrees and fermentation times in alcohol fermentation;
Fig. 6 shows color difference changes which are plotted against Brix degrees and fermentation times in alcohol fermentation;
Fig. 7 shows an area which satisfies the desirable constraints for acetic acid fermentation when fermentation time and aeration rate are selected as independent variables;
Fig. 8 shows total acid contents which are plotted against aeration rates and fermentation times in acetic acid fermentation;
Fig. 9 shows color difference changes which are plotted against aeration rates and fermentation times in acetic acid fermentation;
Fig. 10 shows a process flow of preparing vinegar from astringent persimmon fruits;
Fig. 11 shows pH and total acidity changes which are plotted against fermentation times during alcohol fermentation;
Fig. 12 shows pH and total acidity changes which are plotted against fermentation times during acetic acid fermentation;
Fig. 13 shows an HPLC analysis result of the free sugar contents analysis during alcohol fermentation;
Fig. 14 shows a gas chromatography analysis result of the alcohol contents during alcohol fermentation;
Fig. 15 is a gas chromatogram showing the volatile component contents after alcohol fermentation; and
Fig. 16 is a gas chromatogram showing the volatile component contents of the persimmon vinegar of the present invention.

DETAILED DESCRIPTION OF THE PREFERRED EMBODIMENTS

The persimmon fruits used in the present invention were those which belong to *Diospyros khaki, L* and underwent astringency removal at a temperature of 30 °C and at a carbonic acid gas concentration of 80 % or higher. In contrast to conventional preparation methods of persimmon vinegar, the present invention is characterized in that persimmon fruits are subjected to alcohol fermentation to prepare persimmon vinegar. This alcohol fermentation of persimmon fruits was possible by the finding that persimmon fruits undergo alcohol fermentation naturally even though it is restrictive.

An alcohol fermentation strain was isolated and identified from persimmon fruits. In this regard, YPD media (yeast extract 1%, peptone 2%, glucose 2% and agar 2%) and YM media (yeast extract 0.3%, malt extract 0.3%, glucose 0.5%, bacto peptone 0.5%, pH 6.0) were used for isolating the strain. This strain was recognized as new as a consequence of a further examination and named *Saccharomyces kluyveri* DJ 97 which was deposited in the Korean Collection for Type Cultures, Korean Research Institute of Bioscience and Biotechnology on Oct. 31, 1997 with a deposition No. KCTC 0591BP. For their maintenance, the bacteria was cultured at 25 °C for 24 hours on YPD slant media and then, stored at 4 °C to prevent their overgrowth during in-use.

For use as a control, a conventional acetic acid bacterial strain was isolated. For its maintenance, the acetic acid fermentation bacterial strain was cultured at 30 °C for 72 hours on an agar medium having the composition of Table 1, below, and then, stored to prevent its overgrowth during in-use.

TABLE 1

| Composition of a Maintenance Medium for Acetic Acid Bacteria | |
|---|---|
| Ingredients | Quantity |
| Meat Extract | 3g |
| Yeast Extract | 3g |
| Glycerine | 15g |
| Glucose | 5g |
| $CaCO_3$ | 10g |
| Agar Medium | 20g |
| pH | 7.0 |

For the isolation of the acetic acid bacteria, there were used the culture media shown in Table 2, below.

TABLE 2

| Compositions of Isolation Media for Acetic Acid Bacteria | | | |
|---|---|---|---|
| Solid Media | | Liquid Media | |
| Components | Conc.(%) | Components | Conc.(%) |
| Glucose | 3.0 | Yeast Extract | 0.5 |
| Yeast Extract | 0.5 | Glucose | 0.5 |
| $CaCO_3$ | 1.0 | Glycerine | 1.0 |
| EtOH | 3.0 | $MgSO_4 \cdot 7H_2O$ | 0.02 |
| Agar | 2.0 | EtOH | 5.0 |
| pH | 7.0 | Acetic Acid | 1.0 |
| | | pH | 3.5 |

To prepare the seeds for alcohol fermentation and acetic acid fermentation, first, the astringency-removed persimmon fruits are crushed and squeezed to produce juice which is diluted to a 10% sugar concentration and sterilized at 15 lb for 15 min. Next, the bacteria were inoculated in the sterilized media and cultured at 25 °C for 38 hours while shaking at 200 rpm. These cultured bacteria were used as the seeds for fermentation.

As for seed vinegar bacteria, they were prepared by subjecting persimmon juice to alcohol fermentation, sterilizing the juice and cultivating acetic acid bacteria in the juice supplemented with sugars, alcohols and acetic acid at 30 °C at an aeration rate of 200 rpm for 72 hours.

In the present invention, the production yield of vinegar is expressed as % vinegar amount produced per 100 g of persimmon fruits (v/w) while the production yield of alcohol fermentation is a theoretical yield for an alcohol production amount according to an initial sugar concentration, as calculated below.

$$Yield\ EtOH\ \% = \frac{Final\ EtOH\ Concentration(g/L)}{Initial\ Glucose\ Concentration(g/L)} \div 0.51\,x100$$

Also, the present invention pertains to a beverage comprising the persimmon vinegar. To be drinkable, the persimmon vinegar is added with various food additives, including polydextrose, liquid fructose, a pear extract and honey. Additional examples of the food additives available in the invention comprise stebion 100S, vitamin $B_2$, vitamin C, nicotine amide, citric acid, sodium citrate, sodium L-glutamate, L-menthol, Red L-500, and drink flavor. Quantitatively, the persimmon vinegar beverage comprises the 100% natural persimmon beverage 1-15%, polydextrose 0.7-1.7%, liquid fructose 7-13%, stebion 100S 0.015-0.025%, vitamin $B_2$ 0.0004-0.0008%, vitamin C 0.02-0.05%, nicotinic acid 0.005-0.015%, citric acid 0.02-0.08%, sodium citrate 0.015-0.025%, sodium L-glutamate 0.01-0.02%, L-menthol 0.0001-0.0002%, Red L-500 0.025-0.035%, drink flavor 0.15-0.25% and pure water to totally comprise the beverage%.

More preferably, the persimmon vinegar beverage comprises the 100% natural persimmon beverage 4%, polydextrose 1.4%, liquid fructose 10.5%, a concentrated pear extract (68°Brix) 1.5%, honey 0.47%, stebion 100S 0.019%, vitamin $B_2$ 0.0006%, vitamin C 0.04%, nicotinic acid amide 0.009%, citric acid 0.05%, sodium citrate 0.019%, sodium L-glutamate 0.014%, L-menthol 0.00014%, Red L-500 0.03%, drink flavor 0.19% and pure water to totally comprise the beverage.

A better understanding of the present invention may be obtained in light of the following examples which are set forth to illustrate, but are not to be construed to limit the present invention.

EXAMPLE I: Examination of Alcohol Fermentation and Acetic Acid Fermentation Conditions by Response Surface Analysis

In a response surface analysis method, when at least two regressors compositely affect response variables, the surface which the response variables form is subjected to statistical analysis and a design associated with this statistical analysis is laid out. From the functional relation between the regressors and the response variables, not only the response quantity according to the change of regressors is estimated, but also the regressor values at which the response quantity is maximal or minimal are deduced, as in regression analysis. In addition, experiments in which this procedure is carried out most reasonably, are designed in the response surface analysis.

Generally, in order to deduce unknown functional relations between regressors and response variables, response surface analysis uses multiple regression models which are exemplified by a primary model and a secondary model, represented as follows:

1' model :

$$Y = \beta_0 + \beta_1 X_1 + \beta_2 X_2 + \cdots + \beta_k X_K + \varepsilon$$

2' model :

$$Y = \beta_o + \sum_{i=1}^{k} \beta_i X_i + \sum_{i=1}^{k} \beta_{ii} X_i^2 + \sum_{i=1}^{k} \sum_{j=1}^{k} \beta_{ij} X_i X_j + \varepsilon$$

As in regression analysis, a least square fit is useful to estimate the parameters of these functions. The data for the estimation of parameters are effectively collected in the experiments designed for response surface analysis. At this time, conditions for alcohol and acetic acid fermentation are established by the response surface experiment design used.

First Step : Condition for Alcohol Fermentation.

A central composite design was utilized for optimizing the alcohol fermentation of persimmon fruits while a statistical analysis system (SAS) package is adapted for response surface analysis. Upon alcohol fermentation, the experimental variables were Brix degree ($X_1$), aeration rate ($X_2$) and fermentation time ($X_3$) which were encoded in five levels: -2, -1, 0, 1 and 2, with details as shown in Table 3, below.

TABLE 3

| $X_i$ | Fermentation Conditions | Levels | | | | |
|---|---|---|---|---|---|---|
| Levels of Alcohol Fermentation | | | | | | |
| | | -2 | -1 | 0 | 1 | 2 |
| $X_1$ | $^0$Brix(%) | 9 | 12 | 15 | 18 | 21 |
| $X_2$ | Aeration rate(rpm) | 0 | 50 | 100 | 150 | 200 |
| $X_3$ | (hr) | 48 | 72 | 96 | 120 | 144 |

As the response variables relating to the quality properties of the alcohol fermentation, alcohol content ($Y_1$),

residual sugar content (Brix degree) ($Y_2$), total tannin amount ($Y_3$), pH ($Y_4$), acidity ($Y_5$) and color ($Y_6$) were considered. In order for the above three factorial variables to be in the five levels, a central composite design was established as shown in Table 4, below, and under the resulting 16 conditions, experiments were carried out. When taking the trouble of the strain into account, the fermentation temperature was fixed at 25 °C. The fermented product was filtered through filter paper (Whatman No. 1) to a predetermined quantity level for use as analysis specimens.

TABLE 4

| Central Composite Design for Application of Alcohol Fermentation | | | | | | |
|---|---|---|---|---|---|---|
| Nos. of Treat. | 0Brix(%) | | Aeration rates(rpm) | | Times (hr) | |
| | coded | uncoded | coded | uncoded | coded | uncoded |
| 1 | -1 | 12 | -1 | 50 | -1 | 72 |
| 2 | -1 | 12 | -1 | 50 | 1 | 120 |
| 3 | -1 | 12 | 1 | 150 | -1 | 72 |
| 4 | -1 | 12 | 1 | 150 | 1 | 120 |
| 5 | 1 | 18 | -1 | 50 | -1 | 72 |
| 6 | 1 | 18 | -1 | 50 | 1 | 120 |
| 7 | 1 | 18 | 1 | 150 | -1 | 72 |
| 8 | 1 | 18 | 1 | 150 | 1 | 120 |
| 9 | 0 | 15 | 0 | 100 | 0 | 96 |
| 10 | 0 | 15 | 0 | 100 | 0 | 96 |
| 11 | 2 | 21 | 0 | 100 | 0 | 96 |
| 12 | -2 | 9 | 0 | 100 | 0 | 96 |
| 13 | 0 | 15 | 2 | 200 | 0 | 96 |
| 14 | 0 | 15 | -2 | 0 | 0 | 96 |
| 15 | 0 | 15 | 0 | 100 | 2 | 144 |
| 16 | 0 | 15 | 0 | 100 | -2 | 48 |

As well known, the response surface analysis aims to find out an optimal reaction condition with the aid of graphic techniques. Thus, in the invention, an optimal condition for the alcohol fermentation of persimmon fruits was obtained using a contour map.

In preparing persimmon vinegar, the alcohol content after alcohol fermentation of persimmon fruits is very important because the alcohol is used as a substrate in subsequent acetic acid fermentation. A color difference can be a good quality index for preparing vinegar with a persimmon color.

Accordingly, under the condition that the alcohol content and the color difference were set as restrictive functions, their changes against the experimental variables, that is, fermentation time, aeration rate and Brix degree were represented in contour maps. Because the response surfaces according to the variables, fermentation time, aeration rate and Brix degree, are not exactly coincident with one another upon the alcohol fermentation, appreciate constraints were required to be established. Regarding the constraints, an alcohol content of 6.0 to 7.0% was determined because of the pertinence to the acetic acid fermentation and a total color difference of 30.00 to 41.00 was within an allowable quality change index range. To find out the conditions of the variables which meet these constraints, each of the variables was plotted against another variable and the results were represented in overlapped contour maps.

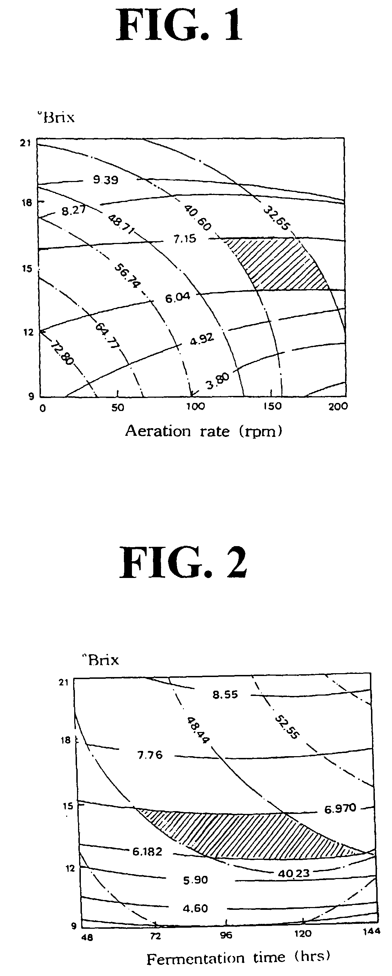

First, Fig. 1 is the result obtained when function relations between aeration rate and Brix degree are plotted. As shown in Fig. 1, the Brix degree and aeration rate which satisfied the constraints range from 13 to 16% and from 110 to 200 rpm, respectively. When a function was obtained from variables, Brix degree and fermentation time, proper values to the constraints were in a range of 13 to 15% for Brix degree and 70 to 140 hours for fermentation time, as shown in Fig. 2. As long as the function between fermentation time and aeration rate was concerned, the constraints were satisfied at a fermentation time of 80 to 100 hours and at an aeration rate of 50 to 150 rpm.

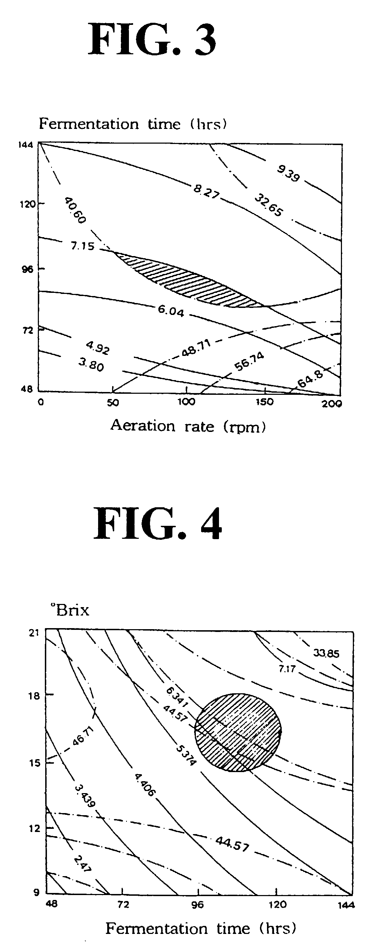

Fig. 4 is a result of the response surface analysis which was conducted when the fermentation time and the Brix degree were selected as variables with a fixed aeration rate of 100 rpm. When account was taken of satisfying the given constraints, that is, an alcohol content of 6 to 7 %, pertinent to the acetic acid fermentation, and a color difference of 30.00 to 41.00 and of the characteristics of the bacteria strain, a Brix degree of 13 to 16% and a fermentation time of 96 to 120 hours were determined as the best, as shown in Fig. 4.

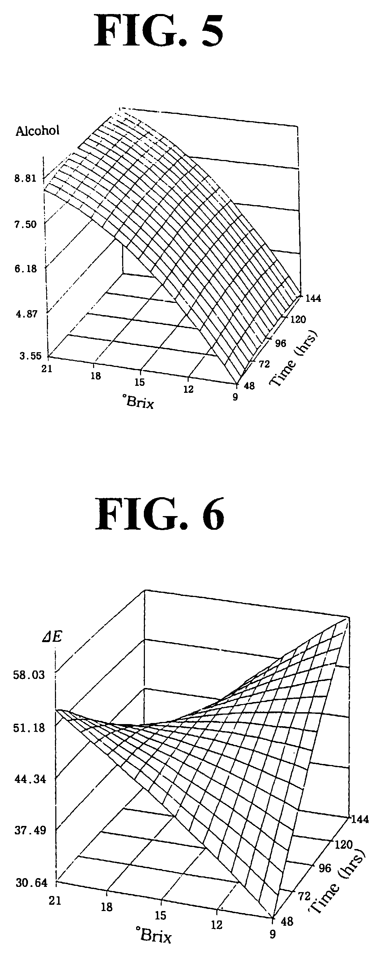

In Figs. 5 and 6, there are response surfaces which were drawn up in order to examine the changes of alcohol content and color according to Brix degree and fermentation time. As shown in Fig. 5, the alcohol content was little affected by the fermentation time, but greatly increased with the Brix degree. For color difference, as the fermentation time was extended, large values were obtained at low Brix degrees, but small values at high Brix degrees. At a fixed aeration rate, response surface analysis was conducted with independent variables of Brix degree and fermentation time, and represented as secondary model regression equations in Table 5, below. Showing the establishment of proper model equations, relatively high coefficients of determination for the alcohol content and the color difference were found in the regression equations.

TABLE 5

| 2' Model Regression Equations for Astringent Persimmon Juice | | | |
|---|---|---|---|
| Response | polynomial equation | $R^2$ | Significance |
| Alcohol | $Y_1=-6.7875+0.5583X_1+0.09375X_2-0.00902X_1^2-0.0007X_1X_2-0.00023X_2^2$ | 0.9081 | 0.0001 |
| $\Delta E$ | $Y_2=-28.5250+4.8071X_1-0.7845X_2-0.03285X_1^2-0.04045X_1X_2-0.00007X_2^2$ | 0.8587 | 0.0692 |
| note : $X_1=°$Brix, $X_2=$Fermentation time (hrs) | | | |

The data obtained from the above response surface analyzes demonstrate that the alcohol fermentation is performed optimally under the condition of a fermentation time of 96 to 120 hours, a Brix degree of 13.0 to 16.0 %, and an aeration rate of 100 rpm, resulting in an alcohol content of 6.0 to 7.0 %, which provides a substrate at a proper amount for the subsequent acetic acid fermentation, and a color difference of 30.00 to 41.00, which is in the range of good quality index.

Second Step : Condition for Acetic Acid Fermentation

As in the alcohol fermentation, a central composite design was utilized for the optimization of the acetic acid fermentation of persimmon fruits while a statistical analysis system (SAS) package is adapted for response surface regression analysis. Upon acetic acid fermentation, the independent variables were aeration rate ($X_1$) and fermentation time ($X_2$) which were encoded in five levels: -2, -1, 0, 1 and 2, with details as shown in Table 6, below.

TABLE 6

| Levels of Acetic Acid Fermentation in Experimental Design | | | | | | |
|---|---|---|---|---|---|---|
| Xi | Fermentation Conditions | Levels | | | | |
| | | -2 | -1 | 0 | 1 | 2 |
| X1 | aeration rate(rpm) | 50 | 100 | 150 | 200 | 250 |
| X2 | Time(hr) | 96 | 120 | 144 | 168 | 192 |

The response variables ($Y_n$) relating to the quality properties of the alcohol fermentation included total acidity ($Y_1$), pH ($Y_2$), brown chromaticity ($Y_3$), turbidity ($Y_4$), and color ($Y_5$). In order for the above two factorial variables to be in the five levels, a central composite design was established as shown in Table 7, below, and under the resulting 10 conditions, experiments were carried out. When taking the trouble of the strain into account, the fermentation temperature was fixed at 25 °C with the titratable acidity at 1. The fermented products were centrifuged and the supernatants were used as analysis specimens.

TABLE 7

| Central Composite Design for Application of Acetic Acid Fermentation | | | | |
|---|---|---|---|---|
| Nos. of Treat. | Aeration rate(rpm) | | Time (hr) | |
| | coded | uncoded | coded | uncoded |
| 1 | 1 | 200 | -1 | 120 |

TABLE 7   (continued)

| Central Composite Design for Application of Acetic Acid Fermentation | | | | |
|---|---|---|---|---|
| Nos. of Treat. | Aeration rate(rpm) | | Time (hr) | |
| | coded | uncoded | coded | uncoded |
| 2 | 1 | 200 | 1 | 168 |
| 3 | -1 | 100 | -1 | 120 |
| 4 | -1 | 100 | 1 | 168 |
| 5 | 0 | 150 | 0 | 144 |
| 6 | 0 | 150 | 0 | 144 |
| 7 | 2 | 250 | 0 | 144 |
| 8 | -2 | 50 | 0 | 144 |
| 9 | 0 | 150 | 2 | 192 |
| 10 | 0 | 150 | -2 | 96 |

As in the alcohol fermentation, color difference was selected as a quality index for this acetic acid fermentation in order to produce the persimmon vinegar which is as similar in color to persimmon fruits as possible. Also, total acidity was selected because it is representative of the efficiency of the acetic acid fermentation.

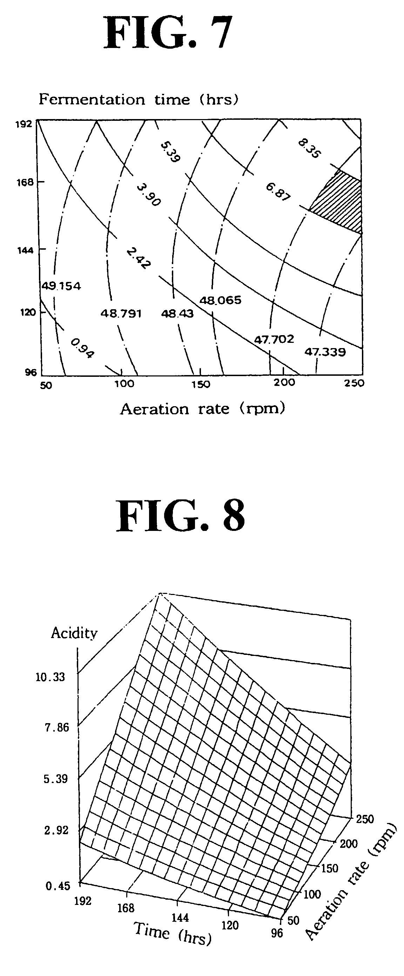

Accordingly, under the condition that the total acidity and the color difference were set as dependent variables, their changes against dependent variables, that is, fermentation time, aeration rate and Brix degree were represented in contour maps from which desired constraints for the acetic acid fermentation were detected. As shown in Fig. 7, the acetic acid fermentation was conducted at an aeration time of 220 to 250 rpm for a time of 150 to 170 hours, the fermented product had a total acidity of 6.8-8.3 %, showing a color difference of 47.34 to 47.70.

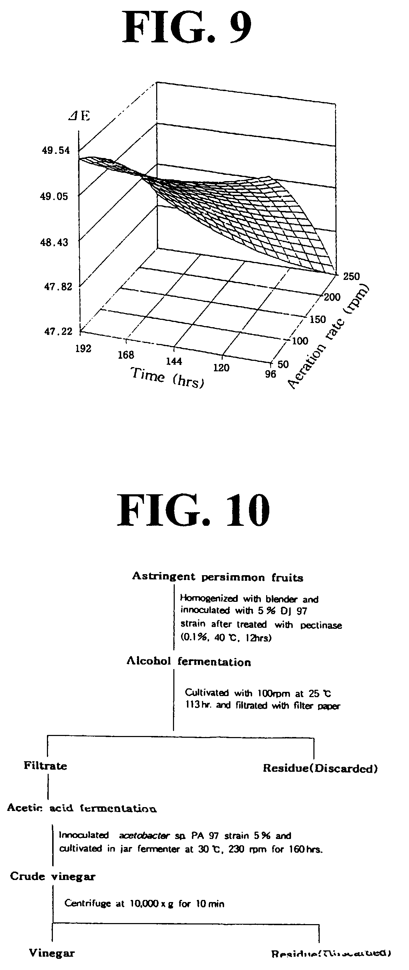

With reference to Figs. 8 and 9, there are response surfaces which show how the total acidity and the color difference were changed according to the independent variables, aeration rate and fermentation time. In these obtained response surfaces, the influence of each of the independent variables can be recognized with their slopes to the dependent variables. As shown in Figs. 8 and 9, the aeration rate and the fermentation time are similar in the influence on the total acidity while lower color difference values are obtained at shorter fermentation times and at higher aeration rates. As a consequence of the response surface analysis, when the desired constraints for the acetic acid fermentation were 6.8-7.8 % for the total acidity and 40.00 to 40.30 for the color difference, the acetic acid fermentation was optimally conducted at an aeration rate of 220 to 250 rpm for a fermentation time of 150 to 170 hours.

EXAMPLE II: Preparation of Persimmon Vinegar

Persimmon vinegar was prepared under the optimal conditions which were established from the response surface analyses for the alcohol fermentation and acetic acid fermentation in Example I. In detail, astringent persimmon fruits were crushed and treated at 40 °C for 12 hours with 0.1% of pectinase (Vision Co., Sumyzyme MC). After being inoculated with 5% of the seeds, the pectinized persimmon fruits experienced alcohol fermentation at 25 °C under the established optimal condition. The fermented product was filtered through a cheese cloth and the filtrate was used as a substrate for acetic acid fermentation. In the acetic acid fermentation, the alcohol fermentation filtrate was added with 5% of the seed vinegar bacteria and subjected to acetic acid fermentation in a 4L fermenter (Korea Fementor Co. Ltd., KF-5L) under the optimal conditions.

Under the conditions established with a central composite design, $R^2$ of the regression equation was found to be 0.9386 for the alcohol content, 0.9479 for residual sugar, and 0.8576 for color difference, so the significance was recognized. Based on this fact, the influence of each of the independent variables was examined by their slopes to the dependent variables in the response surfaces. As a consequence, it was found that the alcohol content was little affected by the fermentation time, but greatly increased with the Brix degree. For color difference, as the fermentation time was extended, large values were obtained at low Brix degrees, but small values at high Brix degrees.

In the alcohol fermentation, as aforementioned, the changes in alcohol content and color difference with the Brix degree and fermentation time could be expected. As a consequence of examining an optimal condition for the alcohol fermentation by response surface analysis, 96 to 130 hours for the fermentation time, 13.0 to 16.0 % for the initial sugar content, and 100 rpm for the aeration rate were established. With this optimal condition in mind, crushed persimmon fruits were treated with 0.1% of pectinase (Vision Co., Sumyzyme MC) at 40 °C for 12 hours, inoculated with the seeds which were obtained by cultivating *Saccharomyces kluyveri* DJ 97 (KCTC 0591BP) in an astringent persimmon extract, and subjected to alcohol fermentation at 25 °C at an aeration rate of 100 rpm for 113 hours, as taught in Fig. 10.

Under the conditions established with a central composite design for optimal acetic acid fermentation, $R^2$ of the regression equation was found to be 0.9747 for total acidity and 0.7057 for color difference, so the significance was recognized. The aeration rate and the fermentation time had similar influence on the total acidity while lower color difference values are obtained at shorter fermentation times and at higher aeration rates.

As a consequence of examining an optimal condition for the acetic acid fermentation by response surface analysis, 150 to 170 hours for the fermentation time and 220 to 250 rpm for the aeration rate were established. The alcohol fermented products were inoculated with the seed vinegar bacteria at an amount of 5.0 % and subjected to acetic acid fermentation at 30 °C, 230 rpm, 0.1 vvm for 216 hours.

Experimental Example 1: pH of Persimmon Vinegar and Total Acidity Change

In this experimental example, the pH of the persimmon vinegar prepared in Example II was measured with a pH meter and the total acidity was calculated on the basis of acetic acid after the neutralization with 0.1 N NaOH.

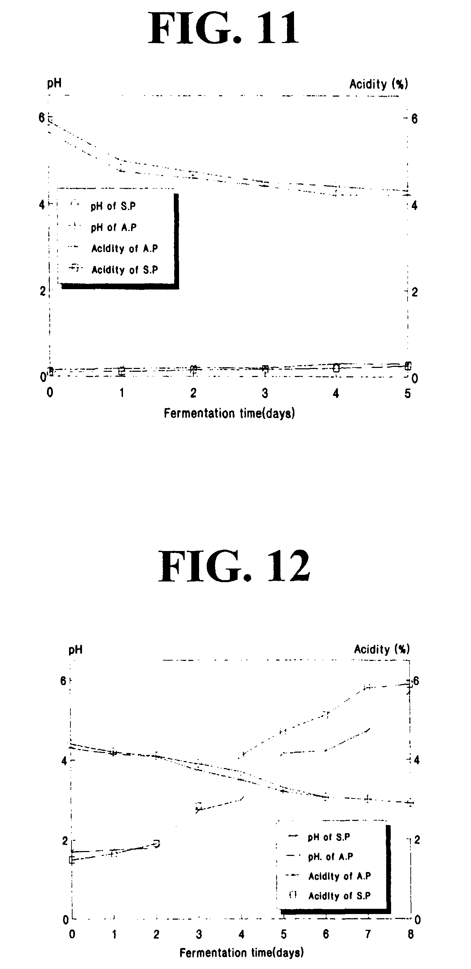

During the alcohol fermentation, the change in pH and total acidity of astringent persimmon was as shown in Fig. 11. In an initial stage, astringent persimmon fruits had pH 5.65 which was decreasingly reduced to 4.27 at 5 days after alcohol fermentation. On the other hand, the total acidity which was 0.15 % in the initial stage was gradually increased with the lapse of fermentation time and finally to 0.29 % at 5 days after alcohol fermentation.

During the acetic acid fermentation, the change in pH and total acidity of the astringent persimmon which had undergone the alcohol fermentation, was shown in Fig. 12. Starting from 4.25, pH was decreasingly changed in the course of the acetic acid fermentation and finally decreased to 2.98 on the 8th day after the fermentation. This pH decrease was slower than that of the alcohol fermentation. As for the total acidity, it was on the increase from 1.68 % at the time of adding the seed vinegar bacteria to 5.81 % on the 8th day after the fermentation, showing steeper increase tendency than in the alcohol fermentation.

Experimental Example 2 : Change in Color and Brown Chromaticity of Persimmon Vinegar

The examination on the color properties of the persimmon vinegar prepared in Example II was conducted by measuring the Hunter's L, a and b values with a chromameter (Model CR-200, CT-210, Minolta Co., Japan) and its brown chromaticity (a/b) was also traced. The color difference (ΔE) of the persimmon vinegar was based on the color of the persimmon fruits.

During the alcohol fermentation, the color and brown chromaticity of astringent persimmon was changed as in Table 8, below.

TABLE 8

| Changes in Color and Brown Chromaticity During Alcohol Fermentation | | | | | | | |
|---|---|---|---|---|---|---|---|
| Samples | Color | Fermentation Times(days) | | | | | |
| | | 0 | 1 | 2 | 3 | 4 | 5 |
| A.P | L | 33.12 | 33.10 | 32.85 | 31.91 | 31.52 | 31.31 |
| | a | +0.02 | -0.04 | -0.29 | -0.30 | -0.49 | -0.65 |
| | b | +2.33 | +2.55 | +3.01 | +2.99 | +3.01 | +3.34 |
| | a/b | +0.01 | -0.02 | -0.10 | -0.10 | -0.16 | -0.20 |
| note: AP Astringent Persimmon (*Diospyros khaki, T*) | | | | | | | |

The L and b values, which represent brightness and yellow chromaticity, respectively, were higher than those of sweet persimmon while the a value, which represents red chromaticity, was lower. As for brown chromaticity (a/b), it was increasingly intensified during the fermentation, being lower than in sweet persimmon.

The change in color of astringent persimmon during the acetic acid fermentation was as shown in Table 9, below. The L and b values were measured as high with a low a value. Its brown chromaticity was on the decrease.

TABLE 9

| Changes in Color and Brown Chromaticity During Acetic Acid Fermentation | | | | | | | | | | |
|---|---|---|---|---|---|---|---|---|---|---|
| Sample | Color | Fermentation Times (days) | | | | | | | | |
| | | 0 | 1 | 2 | 3 | 4 | 5 | 6 | 7 | 8 |
| A.P | L | 25.40 | 24.12 | 23.44 | 23.25 | 23.21 | 23.15 | 23.12 | 23.10 | 23.08 |
| | a | +1.32 | +1.33 | +1.09 | +1.09 | +0.63 | +0.52 | +0.47 | +0.42 | +0.33 |
| | b | +2.60 | +2.54 | +2.21 | +1.34 | +1.21 | +1.16 | +1.13 | +1.11 | +1.09 |
| | a/b | +0.51 | +0.52 | +0.49 | +0.81 | +0.52 | +0.45 | +0.42 | +0.38 | +0.30 |
| note: AP Astringent Persimmon (*Diospyros khaki, T*) | | | | | | | | | | |

Experimental Example 3 : Change in Turbidity of Persimmon Vinegar

The turbidity of the persimmon vinegar prepared in Example II was monitored with the absorbance at 660 nm.
Starting from 2.85 in an initial stage, the turbidity of astringent persimmon was increasingly changed with the lapse of fermentation time and reached 3.70 at 5 days after alcohol fermentation. The results are given in Table 10, below.

TABLE 10

| Changes of Physical Properties During Alcohol Fermentation | | | | | | | |
|---|---|---|---|---|---|---|---|
| Sample | Color | Fermentation Times (days) | | | | | |
| | | 0 | 1 | 2 | 3 | 4 | 5 |
| A.P | Turbid. | 2.85 | 3.08 | 3.50 | 3.65 | 3.67 | 3.70 |
| | $^0$Brix | 14.0 | 10.0 | 8.20 | 7.30 | 5.00 | 4.70 |
| | Tannin | 6.44 | 5.07 | 5.13 | 4.27 | 4.15 | 4.12 |
| note: AP Astringent Persimmon (*Diospyros khaki, T*) | | | | | | | |

Experimental Example 4 : Change in Reducing Sugar and Total Sugar of Persimmon Vinegar

A DNS method was used to measure the reducing sugar in the persimmon vinegar prepared in Example II and its content was determined after comparison with the standard curve drawn up from glucose. As for total sugar, 20 ml of a sample were diluted in 180 ml of distilled water and added with 20 ml of 25% HCl, followed by hydrolysis in a boiling water bath, after which the hydrolyzed solution was neutralized with a 10% NaOH solution to 250 ml. Its quantitative measurement was conducted in the same manner as in the reducing sugar.
During the alcohol fermentation, the reducing sugar and total sugar of astringent persimmon were 125.4 and 132.0 mg/ml, respectively, at an initial stage and were greatly reduced to 4.1 and 4.2 mg/ml, respectively, on the 5th day after the fermentation, as shown in Table 11, below.

TABLE 11

| Sugar Contents During Alcohol Fermentation | | | | | | | |
|---|---|---|---|---|---|---|---|
| Sample | Color | Fermentation Times (days) | | | | | |
| | | 0 | 1 | 2 | 3 | 4 | 5 |
| A.P | Reducing Sugar | 125.4 | 85.6 | 12.0 | 4.4 | 4.2 | 4.1 |
| | Total Sugar | 132.0 | 87.5 | 14.7 | 4.8 | 4.5 | 4.2 |
| note: AP Astringent Persimmon (*Diospyros khaki, T*) | | | | | | | |

Starting from 3.2 and 3.5 mg/ml, the reducing sugar and total sugar of astringent persimmon were decreasingly changed during the acetic acid fermentation and reduced finally to 2.8 and 2.9 mg/ml on 5th day after the fermentation, respectively, as shown in Table 12, below. No significant changes were detected since then.

TABLE 12

| Sugar Contents During Acetic Acid Fermentation | | | | | | | | | | |
|---|---|---|---|---|---|---|---|---|---|---|
| Sample | Sugar | Fermentation Times (days) | | | | | | | | |
| | | 0 | 1 | 2 | 3 | 4 | 5 | 6 | 7 | 8 |
| A.P | Reducing Sugar | 3.2 | 3.0 | 3.0 | 2.9 | 2.9 | 2.8 | 2.8 | 2.8 | 2.8 |
| | Total Sugar | 3.5 | 3.4 | 3.2 | 3.1 | 3.0 | 2.9 | 2.9 | 2.9 | 2.9 |
| note: AP Astringent Persimmon (*Diospyros khaki, T*) | | | | | | | | | | |

Experimental Example 5 : Free Sugar and Organic Acid Analysis of Persimmon Vinegar

Before analysis for the free sugars and organic acids of the persimmon vinegar prepared in Example II, the crude persimmon vinegar was deprived of fats by hexane and of pigments and proteins by a 0.45 µm filter and Sep-Pak $C_{18}$. In order to analyze for ascorbic acid, a dilution of 1 ml of a sample in 5 ml of distilled water was sonicated for 5 min and filtered and the filtrate was saved. The residue was added with 5 ml of distilled water and experienced the same procedure as in above. After repeating this procedure three times, the filtrate which was thus collected to a volume of 20 ml was filtered through an HPLC filter paper and analyzed under the condition of Table 13, below.

TABLE 13

| HPLC Operational Conditions | | | |
|---|---|---|---|
| Items | Conditions | | |
| | Free Sugar | Organic Acid | Ascorbic Acid |
| Apparatus | Waters HPLC | Waters HPLC | Waters HPLC |
| Column | Aminex Carbohydrate HPX 42-A | µ-Bondapak C18 | Shimpack CLC ODS |
| Solvent | Distilled Water | Distilled Water | Acetone:water = 97:3 |
| Flow Rate | 0.6mL/min | 0.6mL/min | 0.6mL/min |
| Chart Rate | 0.25cm/min | 0.25cm/min | 0.25cm/cmin |
| Detector | RI | RI | RI |
| Injection Vol. | 5µℓ | 5µℓ | 5µℓ |

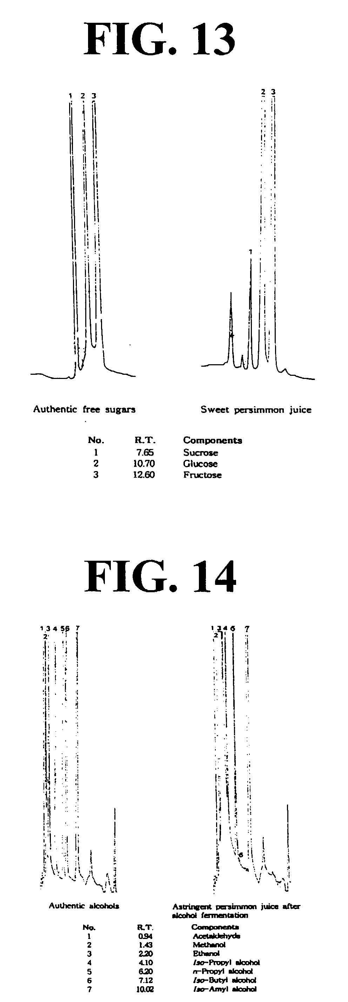

During the alcohol fermentation, authentic free sugars including glucose, fructose and sucrose were detected. It was found that sweet persimmon juice contained glucose at an amount of 0.01%, fructose at 0.15% and sucrose at 0.01%, as shown in Fig. 13. For astringent persimmon juice, free sugar contents are given in Table 14, below.

TABLE 14

| Free Sugar Content Change in Astringent Persimmon Juice During Alcohol Fermentation | | | | | | | |
|---|---|---|---|---|---|---|---|
| Sample | Free Sugar | Fermentation Times (days) | | | | | |
| | | 0 | 1 | 2 | 3 | 4 | 5 |
| A.P | Glucose | 5.63 | 2.64 | 1.25 | 0.25 | Trace | Trace |
| | Fructose | 5.21 | 4.30 | 4.30 | 0.90 | 0.15 | 0.10 |
| | Sucrose | 0.62 | Trace | Trace | Trace | Trace | Trace |
| note: AP Astringent Persimmon (*Diospyros khaki, T*) | | | | | | | |

As shown in Table 14, glucose was the most abundant among the free sugars. At one day after the alcohol fermentation, the glucose content rapidly decreased from 5.63% to 2.64% while the sucrose content was gradually changed from 5.21% to 4.30%. As for sucrose, it remained at a trace amount from 0.62%. Thereafter, the free sugar contents were decreased as the alcohol fermentation proceeded, and reduced to 0.10% for sucrose and to trace amounts for glucose and sucrose at 5 days after the fermentation.

Experimental Example 6: Quantification of Free Amino Acid Content in Persimmon Vinegar

10 ml of the persimmon vinegar sample prepared in Example II were added with 30 ml of ethanol and allowed to stand overnight at room temperature to remove precipitated proteins. After the residual solution was centrifuged at 3,000 rpm for 10 min, the resulting supernatant was dried in a boiling water bath and filtered through a 0.45 μm membrane. The filtrate was analyzed for amino acids in an automatic amino acid analyzer under the condition shown in Table 15, below.

TABLE 15

| Condition for Analyzing Amino Acids | |
|---|---|
| Items | Conditions |
| Apparatus | LKB 4150, alpha automatic Analyzer Ultrapac 11 Cation Exchange Resin (11μm+2μm) 220mm |
| Buffers | pH 3.20 0.2M Na-citrate<br>pH 4.25 0.2M Na-citrate<br>pH 10.00 0.2M Na-citrate |
| Buffer Rate | 40μℓ/hr |
| Ninhydrin Flow Rate | 25μℓ/hr |
| Column Temp. | 50~80°C |
| Chart. Rate | 2mm/min |
| Injection Vol. | 40μℓ |
| note: amino acid(mg%)=(mean peak area of sample/mean peak area of standard amino acid)x (Mw of amino acid/1000)x(100/initial volume of sample)x(eluting rate/injection volume)x100 | |

Experimental Example 7: Quantification of Total Tannin Amount In Persimmon Vinegar

The total tannin amount of the persimmon vinegar prepared in Example II was quantified in accordance with AOAC. In detail, 1 ml of a sample was mixed with 5 ml of the Folin-Denis reagent and then, with 5 ml of a saturated $Na_2CO_3$ solution with shaking, after which the resulting solution was allowed to stand for 30 min at room temperature. Its absorbance at 760 nm was measured, from which the total tannin amount was deduced by comparing with a standard curve.
In an initial stage of the alcohol fermentation, the total tannin content in astringent persimmon juice amounted to 6.44 mg/ml and was decreasingly changed with fermentation time and to 4.12 mg/ml on the 5th day after fermentation.
During the acetic acid fermentation, the total tannin amount was changed as in Table 16, below.

TABLE 16

| Change in Turbidity, Brix degree and Total Tannin During Acetic Acid Fermentation | | | | | | | | | | |
|---|---|---|---|---|---|---|---|---|---|---|
| Sample | Items | Fermentation Times (days) | | | | | | | | |
| | | 0 | 1 | 2 | 3 | 4 | 5 | 6 | 7 | 8 |
| A.P | Turbid. | 3.90 | 3.20 | 2.43 | 1.61 | 1.25 | 1.15 | 0.98 | 0.94 | 0.92 |
| | 0Brix | 5.00 | 4.90 | 4.8 | 4.8 | 4.7 | 4.7 | 4.7 | 4.6 | 4.6 |
| | Total Tannin | 4.10 | 4.06 | 4.02 | 3.98 | 3.85 | 3.71 | 3.69 | 3.60 | 3.52 |
| note: AP Astringent Persimmon (*Diospyros khaki, T*) | | | | | | | | | | |

Starting from 4.10 mg/ml, the total tannin was gradually decreased with the lapse of fermentation time and to 3.82 mg/ml on the 8th day after fermentation. This declination was weaker than that of the alcohol fermentation. Observed were no inhibitory effects of the total tannin on the acetic acid fermentation.

Experimental Example 8 : Analysis for Minerals of Persimmon Vinegar

To 100 ml of a persimmon vinegar sample solution prepared in Example II were added 25 ml of a decomposing

agent (HclO$_4$:H$_2$SO$_4$:H$_2$O$_2$=9:2:5, v/v) and, until this solution was decolorized completely, the solution was slowly heated from a low temperature on a hot plate, so as to decompose the compounds contained in the persimmon vinegar, after which filtration (Whatman No. 2) was done to obtain 100 ml of the filtrate. This filtrate sample was analyzed for minerals in an atomic absorption spectrometer under the condition shown in Table 17, below. A molybedes blue colorimetry technique was applied to quantify the phosphor content of the persimmon vinegar.

TABLE 17

| Condition for Analysis of Minerals | |
|---|---|
| Items | Conditions |
| Apparatus | Model 151 Atomic Absorption Spectrometer |
| Light Source | Hollow Cathode |
| Wavelength(nm) | Ca: 422.7, Mg:285.2, Fe:248.3, Cu:324.7, Zn 213.8 |
| Lamp current(mA) | Ca : 7, Fe: 10, Cu: 5, Mg:3, Zn : 3 |
| Flame decomposition | Air-acetylene oxidizing, fuel lean, blue |

Experimental Example 9: Alcohol Content in Persimmon Vinegar

100 ml of a clear solution sample prepared in Example II were added with 1 ml of n-amyl alcohol as an internal standard and with 100 ml of deionized water, followed by heating distillation. 20 ml of the distilled solution was subjected to gas chromatography under the condition shown in Table 18, below.

TABLE 18

| Operational Condition for Gas Chromatography | |
|---|---|
| Items | Conditions |
| GC Apparatus | Hewlett Packard GC 5890 |
| Column | Carbowax 20M |
| Carrying Gas | He(180°C~1.5µℓ/min) |
| Column Temp. | 40°C (Retention for 7 min) |
| Detector | FID |
| Injection Temp. | 200°C |
| Detector Temp. | 220 °C |
| Injection Vol. | 1 µℓ |

The analyzed results are given in Fig. 14 and Table 19, below.

TABLE 19

| Alcohol Content Change During Alcohol Fermentation | | | | | | | | | |
|---|---|---|---|---|---|---|---|---|---|
| S[1] | Peak No. | R.T[2] | Comp. | Fermentation Times (days) | | | | | |
| | | | | 0 | 1 | 2 | 3 | 4 | 5 |
| AP[4] | 1 | 0.94 | Acet aldehyde | 4.6 | 73.8 | 83.6 | 89.2 | 98.3 | 92.1 |
| | 2 | 1.43 | MeOH | 48.6 | 621.7 | 486.3 | 236.5 | 139.7 | 136.3 |
| | 3 | 2.20 | EtOH | 346.0 | 28433.0 | 41076.0 | 53687.0 | 71420.0 | 75673.0 |
| | 4 | 4.10 | I-PrOH | 4.8 | 23.6 | 29.3 | 78.6 | 75.4 | 68.3 |
| | 5 | 6.20 | n-PrOH | ND[3] | 88.7 | 132.6 | 420.3 | 437.8 | 416.4 |
| | 6 | 7.12 | I-BtOH | 0.1 | 0.8 | 5.6 | 16.2 | 14.3 | 13.2 |
| | 7 | 10.02 | I-Amyl OH | ND | 259.3 | 687.3 | 792.6 | 743.3 | 683.2 |

[1]Sample;

[2]Retention Time;

[3]not detected;

[4]Astringent Persimmon

From Astringent persimmon, 6 alcohols, including methanol, ethanol, isopropyl alcohol, n-propyl alcohol and isoamyl alcohol were detected, together with acetaldehyde. As the alcohol fermentation proceeded, the amount of these alcohols had a tendency to increase till the 4th day of the fermentation, but from the 5th day, the amounts of all of them, except for ethanol, decreased gradually. The content of ethanol was increased from 346 ppm to 75,673 ppm on the 5th day of fermentation.

Experimental Example 10 : Volatile Components of Persimmon Vinegar

From the persimmon juice and vinegar, volatile components were collected using the sequential distillation extraction (SDE) method which Likens and Nilerson invented on the basis of Maarse and Kepner's method, and identified by GC and GC-MS. In this regard, first, 500 ml of a sample and 250 ml of distilled water were added, together with 4-decanol (10 ppm) as an internal standard, in a flask and stirred. Ether was added in another flask warmed to 40 °C, after which volatile components were collected for 1 hour from the two flasks and analyzed by use of GC and GC-MS apparatus equipped as given in Table 20, below.

TABLE 20

| Operational Condition of GC and GC-MS | |
|---|---|
| Items | Conditions |
| GC Apparatus | Hewlett packard GC 5890 |
| GC-MS Apparatus | Shimadzu GC-MS QP 1000 |
| Column | FFAP capillary column |
| Detector | FID |
| Injection Temp. | 250°C |
| Detector Temp. | 250°C |
| Column Oven Temp. | 70~230°C(2°C/min.)-20min.holding |
| Carrying Gas | He |
| Fission Ratio | 100:1 |

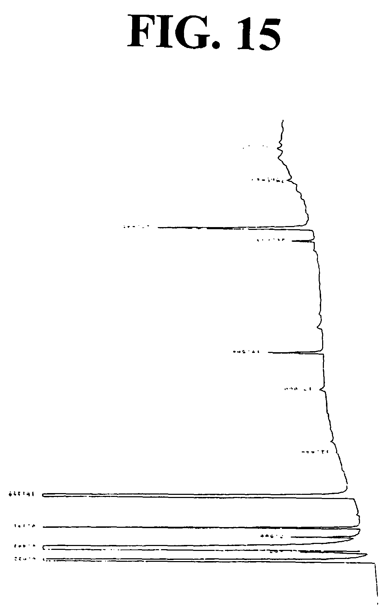

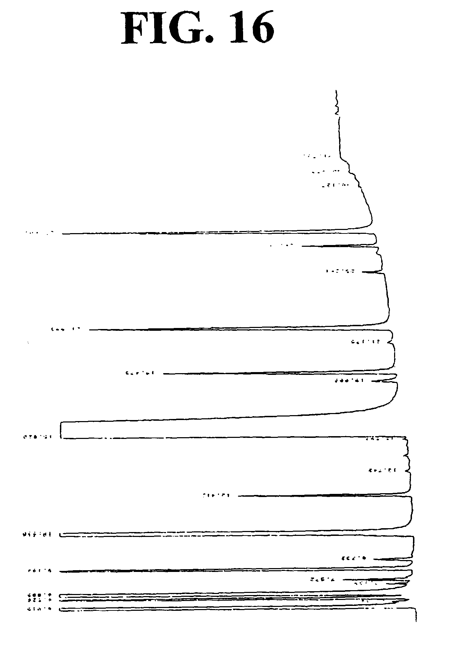

Detected were 8 kinds of alcohols after the alcohol fermentation and 10 kinds of alcohols after the acetic acid fermentation, as shown in Figs. 15 and 16 and Table 21, below.

TABLE 21

| Peak No. | Components | R.T[1] | A.P[2] | |
|---|---|---|---|---|
| | | | Juice[3] | Vinegar |
| 1 | Acetone | 6.528 | 12.80 | 35.66 |
| 2 | Ethyl alcohol | 6.805 | 25305.64 | 480.38 |
| 3 | Acetaldehyde | 8.814 | 44.25 | 18.16 |
| 4 | Ethyl acetate | 10.330 | 184.43 | 65.90 |
| 5 | 2-Hybroxy-2-butanone | 12.412 | ND4 | 5.76 |
| 6 | Acetic acid | 15.820 | ND | 46982.72 |
| 7 | 4-Decanol | 19.475 | 10.00 | 10.00 |
| 8 | 3-Methyl-butanoic acid | 21.998 | ND[4] | 17.56 |
| 9 | 2-Phenylethyl-ester acetic acid | 26.793 | 6.12 | 1.98 |
| 10 | Benzine ethanol | 27.601 | 26.99 | 13.14 |

[1]Retention Time;

[2]Astringent persimmon;

[3] obtained after alcohol fermentation;

[4] not detected

From each sample, the amount of ethanol was decreased to the greatest extent after the acetic acid fermentation while acetic acid was not detected after the alcohol fermentation, but amounted up to 46,982.72 ppm after the acetic acid fermentation. Ethyl acetate was detected at an amount of 184.43 ppm in an astringent persimmon sample after the alcohol fermentation, but its content was greatly reduced to 65.90 ppm after completion of the acetic acid fermentation. The other volatile components detected, except for 2-hydroxy-2-butanone and 3-methyl-butanoic acid, were detected at lower amounts in the sample after the acetic acid fermentation than in the sample after the alcohol fermentation.

EXAMPLE III : Preparation of Persimmon Vinegar Beverage Composition

A persimmon vinegar beverage composition was prepared from the persimmon vinegar prepared in Example II, in combination with the additives as indicated in Table 22, below. All of the materials used were those which passed official standards for food and food additives. For use, subterranean water was filtered by a demineralizing apparatus. The persimmon vinegar and the additives were formulated, together with pure water, in accordance with the indication of Table 22. The resulting solution was stirred for 30 min at 50 °C to complete dissolution. After being subjected to flash pasteurization at 90 °C for 30 sec in a heat exchanger, the solution was passed through a 0.5 micron filter. This filtrate was packed at a predetermined amount in bottles and sealed, after which the bottles experienced post-pasteurization at 90 °C for 15 min and cooled to 40 °C. Before being put on the market, the product underwent labeling, packaging, and quality examining.

TABLE 22

| Composition of Persimmon Vinegar Beverage | |
|---|---|
| Components | Quantity (%) |
| Persimmon Vinegar (100% natural, acidity 4% up) | 4.00000 |
| Polydextrose | 1.43403 |
| Liquid Fructose | 10.51625 |
| Concentrated Pear Extract (68 °Brix) | 1.47059 |

TABLE 22   (continued)

| Composition of Persimmon Vinegar Beverage | |
|---|---|
| Components | Quantity (%) |
| Honey | 0.47801 |
| Stebion 100S | 0.01912 |
| Vitamin $B_2$ | 0.00064 |
| Vitamin C | 0.03824 |
| Nicotinic acid Amide | 0.00956 |
| Citric Acid | 0.04780 |
| Sodium Citrate | 0.01912 |
| Sodium L-Glutamate | 0.1434 |
| L-Menthol | 0.00014 |
| Red L-500 | 0.03187 |
| Drink Flavor | 0.19120 |
| Pure Water | 81.72909 |
| Total | 100.00000 |
| Pear Extract 1.47059% x 68 °Brix / 10 °Brix = 10.00000% | |

As described hereinbefore, the present invention utilizes astringent persimmon fruits, which are disadvantageous in taste, to produce persimmon vinegar which is beneficial to health. In this regard, the novel strain, *Saccharomyces kluyveri* DJ97 (KCTC 0591BP) is used to subject astringent persimmon fruits to alcohol fermentation in advance of acetic acid fermentation. In combination with various additives, such as polydextrose, liquid fructose, concentrated pear extract, honey, citric acid, sodium citrate, etc., the persimmon vinegar provides a beverage which is good for health.

The present invention has been described in an illustrative manner, and it is to be understood the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

**Claims**

1. Persimmon vinegar, which has a total acidity content of 4% or higher and is prepared by fermenting astringent persimmon fruits.

2. A method for preparing the persimmon vinegar of claim 1, in which crushed persimmon fruits are subjected to alcohol fermentation at a temperature of 20 to 30 °C after inoculation with an alcohol fermentation seed strain and with *Saccharomyces kluveri* DJ97 (KCTC 0591BP) and then, to acetic acid fermentation at the same temperature at an aeration rate of 220 to 250 rpm for 150 to 170 hours with the aid of acetic acid fermentation seed vinegar bacteria.

# FIG. 1

°Brix

Aeration rate (rpm)

# FIG. 2

°Brix

Fermentation time (hrs)

# FIG. 3

Fermentation time (hrs)

Aeration rate (rpm)

# FIG. 4

°Brix

Fermentation time (hrs)

# FIG. 5

# FIG. 6

# FIG. 7

Fermentation time (hrs)

Aeration rate (rpm)

# FIG. 8

Acidity

Time (hrs)

Aeration rate (rpm)

# FIG. 9

# FIG. 10

**Astringent persimmon fruits**

Homogenized with blender and
innoculated with 5 % DJ 97
strain after treated with pectinase
(0.1%, 40 ℃, 12hrs)

**Alcohol fermentation**

Cultivated with 100rpm at 25 ℃
113 hr. and filtrated with filter paper

**Filtrate**                                    **Residue(Discarded)**

**Acetic acid fermentation**

Innoculated  *acetobacter* sp. PA 97 strain 5 % and
cultivated in jar fermenter at 30 ℃, 230 rpm for 160 hrs.

**Crude vinegar**

Centrifuge at 10,000 x g for 10 min

**Vinegar**                                    **Residue(Discarded)**

# FIG. 11

pH

Acidity (%)

6

6

4

4

- pH of S.P
- pH of A.P
- Acidity of A.P
- Acidity of S.P

2

2

0

0

0 1 2 3 4 5

Fermentation time(days)

# FIG. 12

pH

Acidity (%)

6

6

4

4

- pH of S.P
- pH. of A.P
- Acidity of A.P
- Acidity of S.P

2

2

0

0

0 1 2 3 4 5 6 7 8

Fermentation time(days)

# FIG. 13

Authentic free sugars          Sweet persimmon juice

| No. | R.T. | Components |
|-----|------|------------|
| 1 | 7.65 | Sucrose |
| 2 | 10.70 | Glucose |
| 3 | 12.60 | Fructose |

# FIG. 14

Authentic alcohols          Astringent persimmon juice after alcohol fermentation

| No. | R.T. | Components |
|-----|------|------------|
| 1 | 0.94 | Acetaldehyde |
| 2 | 1.43 | Methanol |
| 3 | 2.20 | Ethanol |
| 4 | 4.10 | Iso-Propyl alcohol |
| 5 | 6.20 | n-Propyl alcohol |
| 6 | 7.12 | Iso-Butyl alcohol |
| 7 | 10.02 | Iso-Amyl alcohol |

# FIG. 15

# FIG. 16

| | European Patent Office | **EUROPEAN SEARCH REPORT** | Application Number EP 99 11 5018 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 011, no. 030 (C-400), 29 January 1987 (1987-01-29) & JP 61 202679 A (NIIGATA PREF GOV), 8 September 1986 (1986-09-08) * abstract * --- | 1,2 | C12J1/00 |
| X | SUNG-HO HUR ET AL: "Microbiological characteristics and volatile components of deastringent persimmon vinegar." JOURNAL OF FOOD SCIENCE AND NUTRITION, XP000866562 ) 230-233 1998 Correspondence (Reprint) address, Jeong-Hwa Hong, Dep. of Food Sci. & Nutr., Inje Univ., Kimhae 621-749, Korea * page 230 * * page 232 - page 233 * | 1 | |
| Y | --- | 2 | |
| Y | PATENT ABSTRACTS OF JAPAN vol. 011, no. 063 (C-406), 26 February 1987 (1987-02-26) & JP 61 224980 A (YAMAGUCHI PREF GOV), 6 October 1986 (1986-10-06) * abstract * --- | 2 | TECHNICAL FIELDS SEARCHED (Int.Cl.7) C12G C12J |

-/--

The present search report has been drawn up for all claims

| Place of search | Date of completion of the search | Examiner |
|---|---|---|
| THE HAGUE | 2 February 2000 | Bevan, S |

EPO FORM 1503 03.82 (P04C01)

European Patent
Office

**EUROPEAN SEARCH REPORT**

Application Number

EP 99 11 5018

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | NAKASIMA M ET AL: "Studies on utilization of astringent Japanese persimmon cv. Sanja. III. Changes in composition of persimmon vinegar induced by Acetobacter sp. isolated from Sanja persimmon fruits during fermentation." JOURNAL OF JAPANESE SOCIETY OF FOOD SCIENCE AND TECHNOLOGY 'NIPPON SHOKUHIN KOGYO GAKKAISHI!, vol. 34, no. 12, 1987, pages 818-825, XP000866356 Toyama Food Res. Inst., 360 Yosioka Toyama, 939, Japan * abstract * | 1 | |
| Y | | 2 | |
| Y | DATABASE WPI Section Ch, Week 199242 Derwent Publications Ltd., London, GB; Class B04, AN 1992-344706 XP002129535 & JP 04 248972 A (TUBE EXPERTS KK), 4 September 1992 (1992-09-04) * abstract * | 2 | |
| X | PATENT ABSTRACTS OF JAPAN vol. 012, no. 338 (C-527), 12 September 1988 (1988-09-12) & JP 63 098376 A (KUHARA CHIYOUMIRIYOU KK;OTHERS: 01), 28 April 1988 (1988-04-28) * abstract * | 1 | |
| Y | | 2 | |

TECHNICAL FIELDS
SEARCHED (Int.Cl.7)

-/--

The present search report has been drawn up for all claims

| Place of search | Date of completion of the search | Examiner |
|---|---|---|
| THE HAGUE | 2 February 2000 | Bevan, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

# EUROPEAN SEARCH REPORT

Application Number

EP 99 11 5018

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | DATABASE WPI<br>Section Ch, Week 198543<br>Derwent Publications Ltd., London, GB;<br>Class D16, AN 1985-267229<br>XP002129536<br>& JP 60 180574 A (YAGI K),<br>14 September 1985 (1985-09-14)<br>* abstract *<br>----- | 2 | |

TECHNICAL FIELDS
SEARCHED (Int.Cl.7)

The present search report has been drawn up for all claims

| Place of search | Date of completion of the search | Examiner |
|---|---|---|
| THE HAGUE | 2 February 2000 | Bevan, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 11 5018

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2000

| Patent document cited in search report | | Publication date | Patent family member(s) | | Publication date |
|---|---|---|---|---|---|
| JP 61202679 | A | 08-09-1986 | NONE | | |
| JP 61224980 | A | 06-10-1986 | JP | 1728562 C | 19-01-1993 |
| | | | JP | 4014956 B | 16-03-1992 |
| JP 4248972 | A | 04-09-1992 | NONE | | |
| JP 63098376 | A | 28-04-1988 | NONE | | |
| JP 60180574 | A | 14-09-1985 | NONE | | |

EPO FORM P0459

For more details about this annex : see Official Journal of the European Patent Office, No. 12/82